(19) Europäisches Patentamt
European Patent Office
Office européen des brevets

(11) Veröffentlichungsnummer: **0 069 951**
**B1**

# (12) EUROPÄISCHE PATENTSCHRIFT

(45) Veröffentlichungstag der Patentschrift: **29.04.87**

(51) Int. Cl.⁴: **C 08 F 10/00**, C 08 F 4/64

(21) Anmeldenummer: **82105962.3**

(22) Anmeldetag: **03.07.82**

(54) **Verfahren zur Herstellung von Polyolefinen.**

(30) Priorität: **09.07.81 DE 3127133**

(43) Veröffentlichungstag der Anmeldung: **19.01.83 Patentblatt 83/3**

(45) Bekanntmachung des Hinweises auf die Patenterteilung: **29.04.87 Patentblatt 87/18**

(84) Benannte Vertragsstaaten: **BE DE FR GB IT NL**

(56) Entgegenhaltungen:
**US-A-3 242 099**

**DIE MAKROMOLEKULARE CHEMIE, Band 182, Heft 4, 16. April 1981, Seiten 1127-1134, Hüthig und Wepf Verlag, Basel, CH., J. CIHLAR et al.: "Polymerization of ethylene catalyzed by titanocene systems, 2. Catalytic systems Cp2 TiRC1/oxyaluminium compounds"**

**ANGEWANDTE CHEMIE, Band 92, Heft 5, Mai 1980, Seiten 396-402, Verlag Chemie, Weinheim, DE., H. SINN et al.: "Lebende Polymere" bei Ziegler-Katalysatoren extremer Produktivität"**

(73) Patentinhaber: **HOECHST AKTIENGESELLSCHAFT, Postfach 80 03 20, D-6230 Frankfurt am Main 80 (DE)**

(72) Erfinder: **Kaminsky, Walter, Prof. Dr., Buschweg 52, D-2080 Pinneberg (DE)**
Erfinder: **Hähnsen, Heinrich, Dr., Dorfstrasse 24, D-2071 Delingsdorf (DE)**
Erfinder: **Külper, Klaus, Dr., Schützenstrasse 26, D-2000 Hamburg 50 (DE)**
Erfinder: **Woldt, Rüdiger, Dr., Am Galgenberg 21, D-3140 Lüneburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die vorliegende Erfindung betrifft allgemein ein Verfahren zur Polymerisation von Ethylen und/oder anderen Olefinen unter Verwendung neuer Ziegler-Katalysatorsysteme. Es handelt sich insbesondere um ein Verfahren zur Herstellung von Polyethylen und Copolymeren von Ethylen mit anderen α-Olefinen, wie Propylen, Buten und Hexen bei Temperaturen zwischen -50 bis 200° C mittels eines löslichen, halogenhaltigen Ziegler-Systems aus einer halogenhaltigen Übergangsmetallverbindung und einer Sauerstoff enthaltenden Aluminiumalkylverbindung.

Seit 1955 ist bekannt, daß Kombinationen von Übergangsmetallverbindungen mit Hauptgruppenmetallalkylen, die sogenannten Ziegler-Katalysatoren, befähigt sind, auch bei niedrigem Druck Ethylen zu polymerisieren. Ferner sind aus DE-A 26 08 863 und 26 08 933 derartige Polymerisationsverfahren bekannt, bei denen halogenfreie Ziegler-Katalysatoren eingesetzt werden, die aus Bis(cyclopentadienyl)titan- oder zirkondialkyl und Aluminoxanen bestehen. Mit diesen Katalysatoren können bereits recht hohe Polymerisationsaktivitäten erhalten werden, jedoch ist die Herstellung der halogenfreien Übergangsmetallverbindungen aufwendig, und gerade bei tieferen Polymerisationstemperaturen zeigen diese eine geringe Polymerisationsaktivität.

Bekannt sind außerdem Olefin-Polymerisationskatalysatoren (US-A 3 242 099), die z.B. aus Bis(cyclopentadienyl)titandichlorid und einer oligomeren Aluminiumverbindung der Formel

$$\begin{array}{c} R \\ | \\ -Al-O- \end{array}$$

(mit R = Alkyl- oder Aryl-Radikal) bestehen können, wobei die Aluminiumverbindung durch Zugabe von Wasser zu einer Aluminiumkohlenwasserstoffverbindung, z.B. einem Aluminiumtrialkyl, hergestellt wird.

Beschrieben worden sind auch Katalysatorsysteme, welche aus Biscyclopentadienyl-titanalkylchlorid und Oxaluminium-Verbindungen (J. Cihlar et al., Makromol. Chem. 182, 1127-1134 (1981)), sowie solche, welche aus halogenfreien Biscyclopentadienyl-zirkoniumverbindungen als Übergangsmetallkomponente und aus Aluminoxanen mit einem Oligomerisierungsgrad von beispielsweise 10 bis 16 bestehen (Sinn et al., Angew. Chem. 92, 396-402 (1980)).

Schließlich sind noch Katalysatoren bekannt (DE-AS 1 065 616), die aus Cyclopentadienylverbindungen des Titans, Zirkoniums oder Vanadiums sowie aus Aluminiumalkylen oder -alkylhalogeniden bestehen.

Alle diese Katalysatorsysteme des Standes der Technik besitzen den Nachteil, daß ihre Polymerisationsaktivität nicht ausreichend ist.

In der vorliegenden Erfindung wird ein Verfahren vorgeschlagen, das einen Katalysator benutzt, der von leicht zugänglichen (käuflichen) Übergangsmetallkomponenten ausgeht und zudem noch den zweiten Vorteil besitzt, bei den üblichen Polymerisationstemperaturen zwischen 40 und 80° C höhere Polymerisationsaktivitäten aufzuweisen als entsprechende halogenfreie Systeme. Die außerordentlich hohe Polymerisationsaktivität gestattet es, auch höhere α-Olefine in die Polyethylenmatrix einzubauen. Mit anderen löslichen Systemen lassen sich diese Olefine nur schwer polymerisieren. Im Vergleich zu anderen halogenhaltigen Systemen, bei denen hohe Konzentrationen an Titan-, Aluminium- und/oder Magnesiumchloriden verwendet werden, enthält der vorgeschlagene Katalysator nur wenig Halogen an der Übergangsmetallverbindung, die mit Konzentrationen bis herab zu $10^{-10}$ mol/l eingesetzt wird. Hierdurch werden Korrosionen in den Polymerisationsanlagen stark vermindert. Außerdem sind die produzierten Polyolefine halogenärmer als die nach den bisher geübten Verfahren, die Ziegler-Katalysatoren einsetzen. Die Löslichkeit der Komponenten und des sich bildenden Mischkatalysators gestatten sehr einfache Dosier- und Verarbeitungsschritte.

Die Erfindung betrifft somit ein Verfahren zur Herstellung von Polyolefinen durch Polymerisation von Olefinen der Formel $CH_2CHR$ mit R = H oder Alkyl $C_1$-$C_{10}$, allein oder in Mischung, ggf. in Mischung mit $C_4$-$C_{12}$ α,ω-Diolefinen, in Lösungsmitteln, flüssigen Monomeren oder der Gasphase bei Temperaturen zwischen -50 und 200° C mittels einer löslichen, halogenhaltigen Übergangsmetallverbindung und Aluminoxanen, dadurch gekennzeichnet, daß die Polymerisation in Gegenwart eines Katalysatorsystems durchgefürt wird, das aus folgenden Komponenten besteht:

a) Bis(cyclopentadienyl)zirkoniumdichlorid oder Bis(cyclopentadienyl)zirkoniummonomethylmonochlorid

b) Methylaluminoxan der allgemeinen Formeln

$Al_2O(CH_3)_4(Al(CH_3)\text{-}O)_n$

für lineares Methylaluminoxan und

$(Al(CH_3)\text{-}O)_{n+2}$

für cyclisches Methylaluminoxan, in denen eine n Zahl von 4 bis 20 ist.

Es ist vorteilhaft, wenn bei der Polymerisation in Lösungsmitteln Methylaluminoxan-Konzentrationen von $10^{-8}$ bis $10^{-1}$ mol/l sowie Übergangsmetall und Aluminium im atomaren Verhältnis von 10:1 bis $10^8$:1 angewendet werden. Die Polymerisationstemperatur liegt vorzugsweise zwischen 20 und 120° C.

Es ist zweckmäßig, zur gesteuerten Dichteregulierung des zu erzeugenden Polyethylens, die Polymerisation von Ethylen in Gegenwart kleiner Mengen von bis zu 10 Gew.-%

längerkettigen α-Olefinen oder Gemischen (z.B. Buten-1, Propen, Hexen-1) durchzuführen. So lassen sich Polyethylene mit solchen Eigenschaften erzeugen, wie sie bisher durch energieaufwendige Hochdruckverfahren erhalten wurden.

Das vorgeschlagene Katalysatorsystem gestattet es ferner, Copolymerisate aus Ethylen und Propen beliebiger Zusammensetzung zu erzeugen, wobei die Propeneinheiten statistisch in ataktischer Form eingebaut werden.

Erstaunlicherweise ist das Katalysatorsystem geeignet für die Polymerisation in Lösungsmitteln, in den flüssigen Monomeren oder in der Gasphase. Das mittlere Molekulargewicht der gebildeten Polymeren läßt sich durch Wasserstoffzugabe und/oder durch die Variation der Temperatur steuern. Bei tieferen Temperaturen werden höhere, bei höheren Temperaturen niedrigere Molekulargewichte eingestellt.

Ein weiterer Vorteil ist ferner die leichte Zugänglichkeit der Katalysatorkomponenten. Das Bis(cyclopentadienyl)zirkondichlorid ist käuflich. Daraus kann in einer einstufigen Reaktion auch die entsprechende Monoalkylmonochloridverbindung hergestellt werden.

Im Vergleich zu Polymerisationen mit halogenfreien Katalysatorsystemen werden mit den vorgeschlagenen halogenhaltigen Katalysatoren deutlich höhere Aktivitäten erzielt. Die Aktivitätssteigerung liegt bei mindestens ca. 30 %, wenn man von der halogenfreien Schwermetallkomponente Bis(cyclopentadienyl)zirkoniumdimethyl zu dem entsprechenden Dihalogenid übergeht.

Überraschend ist es auch, daß bei Verwendung des Bis(cyclopentadienyl)zirkoniumdihalogenids oder -monoalkylmonohalogenids eine signifikant bessere Aktivität gefunden wurde als bei Verwendung der analogen Titanverbindungen. Bei der in der Praxis wichtigen Polymerisationstemperatur von 70° C, bei der sich die Bis(cyclopentadienyl)titanverbindungen bereits zersetzen und somit nicht einsetzbar sind, erzielt man nach dem erfindungsgemäßen Verfahren mit den Zirkonverbindungen Aktivitäten, die um den Faktor 10 und mehr über denjenigen liegen, die man mit den entsprechenden Titanverbindungen als Katalysatorkomponente bei einer Temperatur von 20° C erhält. Aber auch bei gleicher oder vergleichbar niedriger Polymerisationstemperatur ist die Aktivität der Zirkon-Katalysatoren der Erfindung höher als diejenige von Katalysatoren, die entsprechende Titanverbindungen als Schwermetallkomponente enthalten. Diese Verbesserung der Aktivität ist umso erstaunlicher, als nach dem Stand der Technik (aus der DE-A-1 065 616) bekannt war, daß Katalysatorsysteme wie $ZrCl_4/AlEt_2Cl$ oder Bis(cyclopentadienyl)zirkoniumdichlorid/$Al(CH_3)_3$ eine Polymerisationsaktivität aufweisen, die um Größenordnungen geringer ist als die entsprechender Systeme, bei denen aber die Zirkoniumverbindung durch die analoge Titanverbindung ersetzt ist.

Für die hohe Aktivität, die beim erfindungsgemäßen Verfahren erzielt wird, ist neben der Wahl der Schwermetallkomponente auch die Verwendung bestimmter Methylaluminoxane als Cokatalysatoren von Bedeutung. Vorteilhaft ist der Einsatz längerkettiger, oligomerer Methylaluminoxane. Durch Zugabe von Wasser zu Aluminiumtrimethyl - wie es in der US-A-3 242 099 angegeben ist - erhält man Methylaluminoxane, die zusammen mit der Schwermetallkomponente kein hochaktives Katalysatorsystem ergeben.

Das besonders aktive Methylaluminoxan läßt sich durch vorsichtige Hydrolyse von Aluminiumtrimethyl in Toluol durch Hydratwasser des Kupfersulfatpentahydrat herstellen. Durch Stehenlassen der Lösungen bilden sich die längerkettigen, linearen und cyclischen, besonders aktiven Aluminoxane.

Gerade erst die auf diese Art hergestellten Methylaluminoxane hohen Kondensationsgrades von 6 und mehr ergeben, in Kombination mit den Bis(cyclopentadienyl)zirkoniumverbindungen, die hohe Polymerisationsaktivität bereits bei Übergangsmetallkonzentrationen, die unter $10^{-6}$ mol/l liegen, sie führen auch mit den analogen Schwermetallverbindungen, z.B. den entsprechenden Titanverbindungen, zu einem sprunghaften Anstieg der Aktivität.

Darüberhinaus ist das Katalysatorsystem befähigt, wegen der Stabilität der Komponenten, auch nicht ganz reines Ethylen zu polymerisieren, so daß aufwendige Reinigungsschritte für die Entfernung von Fremdbestandteilen aus dem Ethylen entfallen können.

Im folgenden wird die Erfindung anhand von Beispielen näher erläutert:

**Beispiel 1**

<u>Herstellung von Methylaluminoxan</u>

37,5 g $CuSO_4 \cdot 5\ H_2O$ (0,15 mol, entsprechend 0,75 mol $H_2O$) werden in 250 ml Toluol suspendiert, mit 50 ml Trimethylaluminium (0,52 mol) versetzt und bei 20° C zur Reaktion gebracht. Nach 24 Stunden Reaktionszeit sind ca. 0,9 mol Methan entwickelt worden. Anschließend wird die Lösung von festem Kupfersulfat abfiltriert. Durch Abziehen des Toluols werden 14,5 g Methylaluminoxan (50 % der Theorie) erhalten. Das in Benzol kryoskopisch bestimmte Molekulargewicht liegt bei 850, der mittlere Oligomerisationsgrad bei 14,7.

<u>Katalysatorherstellung und Polymerisation</u>

In einem 1 Liter Glasautoklaven wurden nach Ausheizen und Spülen mit Argon 330 ml Toluol vorgelegt und auf +90° C thermostatisiert. Anschließend wurden 300 mg (5,0 mmol Aluminiumeinheiten) Methylaluminoxan

zugegeben. Nach kurzer Rührzeit (1 min) wurde 0,1 ml einer toluolischen Lösung von $(C_5H_5)_2$ Zr $Cl_2$ (3,33.$10^{-8}$ mol) zugegeben und nach einer weiteren Minute Ethylen bis zu einem Druck von 8 bar aufgepreßt. Die klare Reaktionslösung wurde aufgrund des entstehenden Polyethylens immer viskoser, so daß der Ansatz nach 20 Minuten durch Zugabe von n-Butanol abgebrochen wurde. Der n-Butanolzusatz bewirkte neben der sofortigen Zerstörung des Katalysators auch den Ausfall des entstandenen Polyethylens. Das Polymere wurde anschließend filtriert, mehrmals mit Methanol gewaschen und getrocknet. Die Ausbeute betrug 13,6 g. Das mittlere Molekulargewicht wurde viskosimetrisch mit 91.000 bestimmt. Daraus errechnet sich eine Aktivität von 1,7.$10^6$ g PE/g Zr h bar. Diese ist um 30 % höher als im vergleichbaren halogenfreien System mit 1,2.$10^6$ g PE/g Zr h bar.

**Vergleichsbeispiel A**

Es wurde analog Beispiel 1 gearbeitet, jedoch wurden in Abänderung 3,4.$10^{-7}$mol$(C_5H_5)_2$ Ti $Cl_2$, 295 mg (4,1 mmol) Aluminoxan eingesetzt und bei 20° C polymerisiert. Die Ausbeute betrug nach 0,5 Stunden 5,7 g mit einem mittleren Molekulargewicht über 1.000.000. Dies entspricht einer Aktivität von 90.000 g PE/g Ti h bar.

**Beispiel 2**

Es wurde analog Beispiel 1 gearbeitet. In Abänderung wurden 3,33.$10^{-8}$ mol $(C_5H_5)_2$ Zr $(CH_3)$ Cl und 5,2 mol Aluminoxan eingesetzt. Nach einer Polymerisationszeit von 10 Minuten bei 70° C ergab sich eine Polymerisationsaktivität von 0,8.$10^6$ g PE/g Zr h bar.

**Beispiel 3**

Es wurde analog Beispiel 1 gearbeitet, wobei jedoch in nur 100 ml Toluol das Aluminoxan gelöst wurde. Nach kurzer Rührzeit (3 min) wurde eine toluolische Lösung von $(C_5H_5)_2$ Zr $Cl_2$ (1,66.$10^{-6}$ mol) zugegeben und nach weiteren 3 Minuten Propen aufgepreßt und zwar solange, bis das Gesamtflüssigkeitsvolumen im Autoklaven 330 ml betrug. Anschließend lief die Propenpolymerisation unter Rühren noch 44 Stunden bei 20° C weiter, wobei die Reaktionslösung immer viskoser wurde. Danach wurde das überschüssige Propen abgeblasen, der Kontakt durch Zugabe von wenig Methanol zerstört und die verbleibende zähflüssige Phase mit ca. 400 ml Petrolether versetzt. Anschließend wurde zentrifugiert. Das Lösungsmittel wurde abgezogen und das verbleibende ataktische Polypropylen nachgetrocknet. Die Ausbeute betrug 105 g. Das mittlere Molekulargewicht wurde viskosimetrisch mit 5.000 bestimmt.

**Beispiel 4**

Es wurde analog Beispiel 1 gearbeitet, jedoch mit Abänderung, daß Ethylen mit Buten-1 bei 60° C copolymerisiert wurde. Dazu wurden zusätzlich 5,6 g Buten-1 über eine Druckbürette zugegeben und kurz darauf Ethylen bis zu einem Druck von 8,5 bar aufgepreßt. Nach 2 Minuten fiel weißes Copolymerisat aus. Die Ausbeute betrug 6,5 g. Die Dichte des Copolymerisates betrug nur 0,947 g/ml gegenüber 0,96 bei reinem Polyethylen.

**Beispiel 5**

In dem in Beispiel 1 beschriebenen und vorbehandelten Glasautoklaven wurden 50 ml Toluol vorgelegt und auf die Versuchstemperatur von +20° C thermostatisiert. Anschließend wurden 130 mg (2,2 mmol Aluminiumeinheiten) Methylaluminoxan, hergestellt gemäß Beispiel 1, zugegeben. Nach kurzer Rührzeit (3 min.) wurde eine toluolische Lösung von $(C_5H_5)_2$ Zr $Cl_2$ (6,66.$10^{-7}$ mol) zugegeben und danach 50 ml Hexen-1 zupipettiert. Nach einer Rührzeit von 150 Stunden wurde die Polymerisation durch Zugabe von wenig Methanol abgebrochen. Die Aufarbeitung des Reaktionsansatzes wurde, analog wie in Beispiel 3 beschrieben, durchgeführt. Die Ausbeute betrug 8,4 g ataktisches, glasklares Polyhexen.

**Beispiel 6**

Analog zu Beispiel 1 wurden zur Erzeugung eines Ethylen-Hexen-Copolymerisates 190 ml Toluol und 10 ml Hexen-1 vorgelegt und auf die Versuchstemperatur von 60° C thermostatisiert. Anschließend wurden 200 mg (3,4 mmol Aluminiumeinheiten) Methylaluminoxan, hergestellt gemäß Beispiel 1, zugegeben. Nach kurzer Rührzeit von ca. 5 Minuten wurden 0,5 ml einer 8,0.$10^{-4}$ molaren, toluolischen Lösung von $(C_5H_5)_2$ Zr $Cl_2$ zupipettiert und im Anschluß daran Ethen bis zu einem Druck von 8,5 bar aufgepreßt. Nach einer Polymerisationsdauer von 25 Minuten mußte der Kontakt durch Zugabe von Ethanol zerstört werden, da der Autoklav mit Polymeren gefüllt war. Die Aktivität ergab sich bei einer Ausbeute von 9,2 g zu 4.$10^5$ g Polymer/g Zr h bar. Die Dichte wurde zu 0,941 g/$cm^3$ bestimmt.

**Vergleichsbeispiel B**

Die Vorbereitungen erfolgten wie bei Beispiel 1. Zu 250 ml auf 20° C thermostatisiertes Toluol wurden $0,5.10^{-3}$ mol Aluminiumtrimethyl gegeben und während 25 Minuten tropfenweise mit $0,4.10^{-3}$ mol Wasser unter Rühren versetzt. Nach weiteren 5 Minuten Nachreaktionszeit wurde die Lösung mit $0,5.10^{-7}$ mol $(C_5H_5)_2TiCl_2$ versetzt, Ethylen bis 8 bar aufgepreßt und eine Stunde lang polymerisiert. Das Polymere wurde anschließend filtriert, mehrmals mit Methanol gewaschen und getrocknet. Der mittlere Oligomerisationsgrad des Aluminoxans betrug 3 bis 5. Die Ausbeute betrug 4,9 g. Dies entspricht einer Aktivität von 28.000 g Polyethylen/g Ti h bar.

**Vergleichsbeispiel C**

Es wurde wie in Beispiel 8 gearbeitet, jedoch wurde $(C_5H_5)_2$ $TiCl(CH_3)$ anstelle des Dichlorids eingesetzt. Die Ausbeute betrug nach 1 Stunde Reaktionszeit 2,6 g. Dies entspricht einer Aktivität von 15.000 g Polyethylen/g Ti h bar.

**Vergleichsbeispiel D**

Es wurde analog Beispiel 8 gearbeitet. Geändert wurde die Toluolmenge auf 330 ml, die Reaktionstemperatur auf 70° C, und als Übergangsmetallverbindung wurden 0,33 mol $(C_5H_5)_2$ $ZrCl_2$ eingesetzt. Die Aktivität des Katalysators ergab sich zu 390.000 g Polyethylen/g Zr h bar.

**Patentansprüche**

1. Verfahren zur Herstellung von Polyolefinen durch Polymerisation von Olefinen der Formel $CH_2CHR$ mir R = H oder Alkyl $C_1$-$C_{10}$, allein oder in Mischung, ggf. in Mischung mit $C_4$-$C_{12}$- α,ω-Diolefinen, in Lösungsmitteln, flüssigen Monomeren oder der Gasphase bei Temperaturen zwischen -50 und 200° C mittels einer löslichen, halogenhaltigen Übergangsmetallverbindung und Aluminoxanen, dadurch gekennzeichnet, daß die Polymerisation in Gegenwart eines Katalysatorsystems durchgeführt wird, das aus folgenden Komponenten besteht:

a) Bis(cyclopentadienyl)zirkoniumdichlorid oder Bis(cyclopentadienyl)zirkoniummonomethylmonochlorid

b) Methylaluminoxan der allgemeinen Formeln
$Al_2O(CH_3)_4(Al(CH_3)$-$O)_n$
für lineares Methylaluminoxan und
$(Al(CH_3)$-$O)_{n+2}$
für cyclisches Methylaluminoxan, in denen n eine Zahl von 4 bis 20 ist.

2. Verfahren nach Anspruch 1, dadurch gekennzeichnet, daß bei der Polymerisation in Lösungsmitteln Aluminoxankonzentrationen von $10^{-8}$ bis $10^{-1}$ mol/l sowie Übergangsmetall und Aluminium im atomaren Verhältnis von 10:1 bis $10^8$:1 angewendet werden.

3. Verfahren nach Anspruch 1, dadurch gekennzeichnet, daß die Polymerisation von Ethylen bei Übergangsmetallkonzentrationen von $10^{-6}$ bis $10^{-8}$ mol/l durchgeführt wird.

4. Verfahren nach Anspruch 1, dadurch gekennzeichnet, daß die Polymerisation mit verunreinigtem Ethylen ohne Erhöhung der Katalysatorkonzentration durchgeführt wird.

5. Verfahren nach Anspruch 1, dadurch gekennzeichnet, daß die Polymerisationstemperatur zwischen 20 und 120° C liegt.

6. Verfahren nach Anspruch 1, dadurch gekennzeichnet, daß Ethylen mit Propylen copolymerisiert wird.

7. Verfahren nach Anspruch 1, dadurch gekennzeichnet, daß die Copolymerisation von Ethylen mit anderen α-Olefinen, vorzugsweise Buten und Hexen, durchgeführt wird.

**Claims**

1. A process for the preparation of a polyolefin by polymerizing an olefin of the formula $CH_2CHR$ in which R = H or $C_1$-$C_{10}$alkyl, on its own or as a mixture, if appropriate as a mixture with $C_4$-$C_{12}$ α,ω-diolefins, in solvents, liquid monomers or the gas phase, at temperatures between -50 and 200 °C, using a soluble, halogen-containing transition metal compound and aluminoxanes, which comprises carrying out the polymerization in the presence of a catalyst system composed of the following components:

a) bis(cyclopentadienyl)zirconium dichloride or bis(cyclopentadienyl)zirconium monomethyl monochloride

b) methylaluminoxane having the general formulae
$Al_2O(CH_3)_4(Al(CH_3)$-$O)_n$
for a linear methylaluminoxane and
$(Al(CH_3)$-$O)_{n+2}$
for a cyclic methylaluminoxane, in which n is a number from 4 to 20.

2. The process as claimed in claim 1, wherein aluminoxane concentrations of $10^{-8}$ to $10^{-1}$ mole/l are used for polymerization in solvents, and the transition metal and the aluminum are used in an atomic ratio of 10:1 to $10^8$:1.

3. The process as claimed in any of claims 1 to 2, wherein the polymerization of ethylene is carried out at transition metal concentrations from $10^{-6}$ to $10^{-8}$ mole/l.

4. The process as claimed in any of claims 1 to 3, wherein the polymerization is carried out with impure ethylene without increasing the catalyst concentration.

5. The process as claimed in any of claims 1 to 4, wherein the polymerization temperature is between 20 and 120°C.

6. The process as claimed in any of claims 1 to 5, wherein ethylene is copolymerized with propylene.

7. The process as claimed in any of claims 1 to 6, wherein the copolymerization of ethylene with other α-olefins, preferably butene and hexene, is carried out.

**Revendications**

1. Procédé pour préparer des polyoléfines par polymérisation d'oléfines de formule $CH_2CHR$, avec R=H ou un radical alkyle en $C_1$-$C_{10}$, seules ou en mélange, éventuellement en mélange avec des α,ω-dioléfines en $C_4$-$C_{12}$, dans des solvants, des monomères liquides ou en phase gazeuse, à des températures comprises entre -50 et 200°C, à l'aide d'un composé soluble et halogéné d'un métal de transition, et d'aluminoxanes, caractérisé en ce que la polymérisation s'effectue en présence d'un système catalyseur constitué des constituants suivants:

a) dichlorure de bis(cyclopentadiényl)zirconium ou monochlorure de bis(cyclopentadiényl)zirconium-monométhyle,

b) méthylaluminosiloxane ayant les formules générales $Al_2O(CH_3)_4(Al(CH_3)\text{-}O)_n$

pour un méthylaluminoxane linéaire, et

$(Al(CH_3)\text{-}O)_{n+2}$

pour un méthylaluminoxane cyclique, n désignant un nombre de 4 à 10.

2. Procédé selon la revendication 1, caractérisé en ce que, lors de la polymérisation dans des solvants, on utilise des concentrations d'aluminoxane de $10^{-8}$ à $10^{-1}$ mole /l, ainsi qu'un rapport atomique de 10:1 à $10^8$:1 entre le métal de transition et l'aluminium.

3. Procédé selon la revendication 1, caractérisé en ce que la polymérisation de l'éthylène est réalisée à des concentrations du métal de transition de $10^{-6}$ à $10^{-8}$ mole /l.

4. Procédé selon la revendication 1, caractérisé en ce que la polymérisation est réalisée avec de l'éthylène non-purifié, sans augmentation de la concentration du catalyseur.

5. Procédé selon la revendication 1, caractérisé en ce que la température de polymérisation est comprise entre 20 et 120°C.

6. Procédé selon la revendication 1, caractérisé en ce que l'éthylène est copolymérisé avec le propylène.

7. Procédé selon la revendication 1, caractérisé en ce que la copolymérisation de l'éthylène est réalisée avec d'autres α-oléfines, de préférence le butène et l'hexène.